# EUROPEAN PATENT SPECIFICATION

(11) **EP 2 911 339 B1**
(45) Date of publication and mention of the grant of the patent: **31.08.2016**
(21) Application number: 12888110.9
(22) Date of filing: 07.11.2012
(51) Int. Cl.: H04L 12/24

(54) **METHOD AND DEVICE FOR PROCESSING LINE DETECTION**
VERFAHREN UND VORRICHTUNG ZUR VERARBEITUNG EINER LEITUNGSERKENNUNG
PROCÉDÉ ET DISPOSITIF DE TRAITEMENT DE DÉTECTION DE LIGNE

(43) Date of publication of application: 26.08.2015
(73) Proprietor: Huawei Technologies Co., Ltd., Longgang District Shenzhen, Guangdong 518129 (CN)
(72) Inventor: LI, Bo, Shenzhen Guangdong 518129 (CN); SHI, Cao, Shenzhen Guangdong 518129 (CN); GAO, Xingguo, Shenzhen Guangdong 518129 (CN); YU, Zhongyang, Shenzhen Guangdong 518129 (CN); LI, Xiaoshuang, Shenzhen Guangdong 518129 (CN)
(74) Representative: Thun, Clemens
(86) International application number: PCT/CN2012/084236
(87) International publication number: WO 2014/071578

(56) References cited:
- CN-A- 1 917 435
- CN-A- 102 045 107
- CN-A- 102 571 502
- US-A1- 2007 260 904

## Description

### TECHNICAL FIELD

Embodiments of the present invention relate to the field of communications technologies, and in particular, to a line detection processing method and a device.

### BACKGROUND

With high-speed development of the Internet and rapid promotion of multimedia services, requirements for network bandwidth increasingly grow, and in wired broadband access, twisted pair to the home develops toward fiber to the home. However, in renewal of some old communities, there is a practical problem that fiber to the home is difficult to implement; as a result, the fiber can only be laid to the neighborhood of residents' homes, and existing twisted pair resources still need to be used in the last small part of to-the-home cable. For this kind of scenario, a fiber to the distribution point (hereinafter referred to as FTTDP for short) device is used between a fiber and a twisted pair in the prior art, so as to perform line switching.

For example, CN 102571502A refers to a terminal access equipment and reverse power over the Ethernet (PoE) state detection method.

In the prior art, because the FTTDP device cannot be connected to an external power supply, a user equipment (hereinafter referred to as UE for short) needs to used to perform reverse power supply. When powered on, the FTTDP device can perform line detection on a twisted pair line between the FTTDP device and the user equipment. A specific detection method may include a metallic line test (hereinafter referred to as MELT for short) technology, a single-ended loop test (hereinafter referred to as SELT for short) technology, and a dual-ended loop test (hereinafter referred to as DELT for short) technology. Whether the twisted pair line between the FTTDP device and the user equipment is faulty can be detected by using the foregoing three line detection technologies.

However, if reverse power supply is discontinued, an existing FTTDP device cannot perform detection on a twisted pair line between the FTTDP device and a user equipment, and therefore, a cause of discontinuation of the reverse power supply cannot be learned.

### SUMMARY

Embodiments of the present invention provide a line detection processing method and a device, so as to implement that an FTTDP device can perform detection on a twisted pair line if reverse power supply is discontinued.

According to a first aspect, an embodiment of the present invention provides a line detection processing method, including:
detecting, by using a detection circuit, whether reverse power supply on a twisted pair line is discontinued;
if the reverse power supply on the twisted pair line is discontinued, triggering a status switch to switch from a normal power supply state to a backup power supply state, so as to simultaneously trigger a line detection module and an energy storage capacitor; and
performing detection on the twisted pair line between the line detection module and a user equipment by using the line detection module, and supplying power to the line detection module by using the energy storage capacitor.

In a first possible implementation manner of the first aspect, the detecting, by using a detection circuit, whether reverse power supply on a twisted pair line is discontinued includes: detecting, by using the detection circuit, whether a reverse power supply voltage on the twisted pair line is a first level; and if the reverse power supply voltage on the twisted pair line is the first level, determining that the reverse power supply is discontinued.

With reference to the first aspect or the first possible implementation manner of the first aspect, in a second possible implementation manner, after the supplying power to the line detection module by using the energy storage capacitor, the method further includes: discontinuing running of another module other than the line detection module.

With reference to the second possible implementation manner of the first aspect, in a third possible implementation manner, the discontinuing running of another module other than the line detection module includes: discontinuing running of a downlink data transmission module.

With reference to the first aspect, the first possible implementation manner of the first aspect, the second possible implementation manner of the first aspect, and the third possible implementation manner of the first aspect, in a fourth possible implementation manner, the performing detection on the twisted pair line between the line detection module and a user equipment includes: performing detection on the twisted pair line by using a MELT technology, a SELT technology, or a DELT technology.

With reference to the fourth possible implementation manner, in a fifth possible implementation manner, the performing detection on the twisted pair line by using a SELT technology includes: performing detection on the twisted pair line in a time domain reflectometry (hereinafter referred to as TDR for short) manner of the SELT technology.

With reference to the first aspect, the first possible implementation manner of the first aspect, the second possible implementation manner of the first aspect, the third possible implementation manner of the first aspect, the fourth possible implementation manner of the first aspect, and the fifth possible implementation manner of the first aspect, in a sixth possible implementation manner, after the performing detection on the twisted pair line between the line detection module and a user equipment, the method further includes: sending a detection result to a management server by using the line detection module, so that the management server determines a cause of a line fault according to the detection result.

According to a second aspect, an embodiment of the present invention provides a fiber to the distribution point device, including:
a power supply detection module, configured to detect, by using a detection circuit, whether reverse power supply on a twisted pair line is discontinued;
a triggering module, configured to: if the reverse power supply on the twisted pair line is discontinued, trigger a status switch to switch from a normal power supply state to a backup power supply state, so as to simultaneously trigger a line detection module and an energy storage capacitor; and
a detection processing module, configured to: perform detection on the twisted pair line between the line detection module and a user equipment by using the line detection module, and supply power to the line detection
module by using the energy storage capacitor.

In a first possible implementation manner of the second aspect, the power supply detection module is specifically configured to: detect, by using the detection circuit, whether a reverse power supply voltage on the twisted pair line is a first level; and if the reverse power supply voltage on the twisted pair line is the first level, determine that the reverse power supply is discontinued.

With reference to the second aspect or the first possible implementation manner of the second aspect, in a second possible implementation manner, the foregoing fiber to the distribution point device further includes: a power saving processing module, configured to discontinue running of another module other than the line detection module.

With reference to the second possible implementation manner of the second aspect, in a third possible implementation manner, the power saving processing module is specifically configured to discontinue running of a downlink data transmission module.

With reference to the second aspect, the first possible implementation manner of the second aspect, the second possible implementation manner of the second aspect, and the third possible implementation manner of the second aspect, in a fourth possible implementation manner, the detection processing module is specifically configured to perform detection on the twisted pair line by using a MELT technology, a SELT technology, or a DELT technology.

With reference to the fourth possible implementation manner of the second aspect, in a fifth possible implementation manner, the detection processing module is specifically configured to perform detection on the twisted pair line in a TDR manner of the SELT technology.

With reference to the second aspect, the first possible implementation manner of the second aspect, the second possible implementation manner of the second aspect, the third possible implementation manner of the second aspect, the fourth possible implementation manner of the second aspect, and the fifth possible implementation manner of the second aspect, in a sixth possible implementation manner, the foregoing fiber to the distribution point device further includes: a detection result feedback module, configured to send a detection result to a management server, so that the management server determines a cause of a line fault according to the detection result.

According to a third aspect, an embodiment of the present invention provides another fiber to the distribution point device, where the device includes:
a detection circuit, configured to detect whether reverse power supply on a twisted pair line is discontinued;
a status switch, configured to switch from a normal power supply state to a backup power supply state when the detection circuit detects that the reverse power supply is discontinued, so as to simultaneously trigger a line detection processor and an energy storage capacitor;
the energy storage capacitor, configured to supply power to the line detection processor; and
a line detection processor, configured to perform detection on the twisted pair line between the line detection processor and a user equipment during
a process in which the energy storage capacitor supplies power.

In a first possible implementation manner of the third aspect, the detection circuit is specifically configured to: detect whether a reverse power supply voltage on the twisted pair line is a first level; and if the reverse power supply voltage on the twisted pair line is the first level, determine that the reverse power supply is discontinued. With reference to the third aspect or the first possible implementation manner of the third aspect, in a second possible implementation manner, the line detection processor is further configured to discontinue running of another module other than the line detection processor.

With reference to the second possible implementation manner of the third aspect, in a third possible implementation manner, the line detection processor is specifically configured to discontinue running of a downlink data transmission module.

With reference to the third aspect, the first possible implementation manner of the third aspect, the second possible implementation manner of the third aspect, and the third possible implementation manner of the third aspect, in a fourth possible implementation manner, the line detection processor is specifically configured to perform detection on the twisted pair line by using a MELT technology, a SELT technology, or a DELT technology.

With reference to the fourth possible implementation manner of the third aspect, in a fifth possible implementation manner, the line detection processor is specifically configured to perform detection on the twisted pair line in a TDR manner of the SELT technology.

With reference to the third aspect, the first possible implementation manner of the third aspect, the second possible implementation manner of the third aspect, the third possible implementation manner of the third aspect, the fourth possible implementation manner of the third aspect, and the fifth possible implementation manner of the third aspect, in a sixth possible implementation manner, the foregoing fiber to the distribution point device further includes: a data transmitter, configured to send a management server a detection result, of the twisted pair line, acquired by the line detection processor through detection.

According to the line detection processing method and the device provided in the embodiments of the present invention, if an FTTDP device detects, by using a detection circuit, that reverse power supply on a twisted pair line is discontinued, a status switch switches from a normal power supply state to a backup power supply state, and the switching operation can simultaneously trigger an energy storage capacitor and a line detection module, so that the line detection module performs detection on the twisted pair line between the line detection module and a UE during a process in which the energy storage capacitor supplies power to the line detection module, thereby resolving a problem, in the prior art, that detection cannot be performed on a twisted pair line if reverse power supply is discontinued.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of Embodiment 1 of a line detection processing method according to the present invention;
FIG. 2 is a flowchart of Embodiment 2 of a line detection processing method according to the present invention;
FIG. 3 is a schematic structural diagram of Embodiment 1 of a fiber to the distribution point device according to the present invention;
FIG. 4 is a schematic structural diagram of Embodiment 2 of a fiber to the distribution point device according to the present invention;
FIG. 5 is a schematic structural diagram of Embodiment 3 of a fiber to the distribution point device according to the present invention; and
FIG. 6 is a schematic structural diagram of Embodiment 4 of a fiber to the distribution point device according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

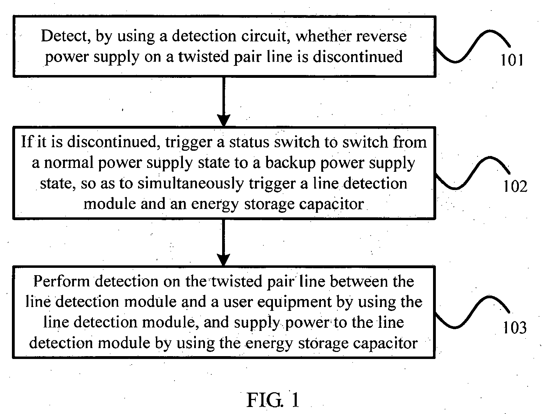

The sequence numbers of the following embodiments of the present invention are merely for description, and do not imply precedence of the embodiments. FIG. 1 is a flowchart of Embodiment 1 of a line detection processing method according to the present invention. As shown in FIG. 1, in this embodiment, the line detection processing method in which a fiber to the distribution point device, that is, an FTTDP device is an execution body is described. The line detection processing method in this embodiment includes:
Step 101. Detect, by using a detection circuit, whether reverse power supply on a twisted pair line is discontinued.

Specifically, a detection circuit may be set on the FTTDP device, and the detection circuit is connected to the twisted pair line. Whether the reverse power supply is discontinued is learned by detecting a voltage at a connection point of the twisted pair line and the detection circuit; whether the reverse power supply is discontinued may also be learned by detecting another parameter of the detection circuit, which is not specifically limited herein.

Step 102. If the reverse power supply on the twisted pair line is discontinued, trigger a status switch to switch from a normal power supply state to a backup power supply state, so as to simultaneously trigger a line detection module and an energy storage capacitor.

Specifically, the detection circuit that can detect whether the reverse power supply is discontinued is connected to the status switch. When the reverse power supply is discontinued, the status switch may be triggered to switch from the normal power supply state to the backup power supply state, where switching to the backup power supply state means that the energy storage capacitor is connected, and the line detection module is also simultaneously triggered.

Step 103. Perform detection on the twisted pair line between the line detection module and a user equipment by using the line detection module, and supply power to the line detection module by using the energy storage capacitor.

Specifically, when it is learned that the reverse power supply is discontinued, the energy storage capacitor set on the FTTDP device is started, so as to supply power to the FTTDP device. In addition, in the power supply process, detection may be performed on the twisted pair line between the FTTDP device and the UE by using a MELT technology, a SELT technology, or a DELT technology.

According to the line detection processing method provided in this embodiment, if an FTTDP device detects, by using a detection circuit, that reverse power supply on a twisted pair line is discontinued, a status switch switches from a normal power supply state to a backup power supply state, and the switching operation can simultaneously trigger an energy storage capacitor and a line detection module, so that the line detection module can perform detection on the twisted pair line between the line detection module and a UE during a process in which the energy storage capacitor supplies power to the line detection module, so as to learn a cause of discontinuation of the reverse power supply by means of line detection.

A specific embodiment is used in the following to describe in detail the method embodiment shown in FIG. 1.

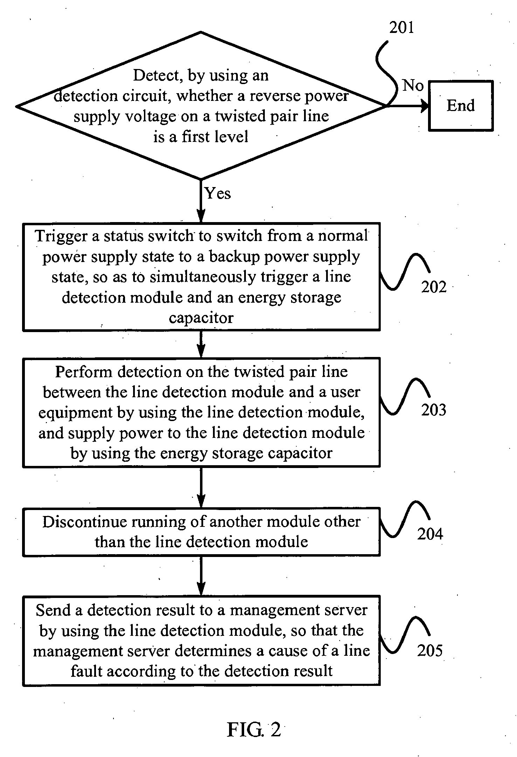

FIG. 2 is a flowchart of Embodiment 2 of a line detection processing method according to the present invention. As shown in FIG. 2, in this embodiment, the line detection processing method in which a fiber to the distribution point device, that is, an FTTDP device is an execution body is described. The line detection processing method in this embodiment includes:
Step 201. Detect, by using a detection circuit, whether a reverse power supply voltage on a twisted pair line is a first level; if the reverse power supply voltage on the twisted pair line is the first level, step S202 is performed, and if the reverse power supply voltage on the twisted pair line is not the first level, the procedure ends.

In an actual application process, when reverse power supply is discontinued, the reverse power supply voltage is the first level, for example, a low level; and when the reverse power supply is normal, the reverse power supply voltage is another level, for example, a high level. The reverse power supply voltage displays different values when the reverse power supply is discontinued and when the reverse power supply is normal; therefore, in this embodiment, whether the reverse power supply is discontinued can be determined by detecting a value of the reverse power supply voltage on the twisted pair line.

In specific implementation, a detection circuit may be added to the FTTDP device, and a value of the reverse power supply voltage on the twisted pair line is detected by using the detection circuit. For example, when the reverse power supply is normal, the reverse power supply voltage is about 50V; when the reverse power supply is discontinued, the reverse power supply voltage is about 3V. As a result, when a voltage detection circuit in the FTTDP device detects that a value of the reverse power supply voltage is about 3V, it can be determined that the reverse power supply to the FTTDP device is discontinued.

Step 202. Trigger a status switch to switch from a normal power supply state to a backup power supply state, so as to simultaneously trigger a line detection module and an energy storage capacitor.

Specifically, the detection circuit that can detect whether the reverse power supply is discontinued is connected to the status switch. When the reverse power supply is discontinued, the status switch may be triggered to switch from the normal power supply state to the backup power supply state, where switching to the backup power supply state means that the energy storage capacitor is connected, and the line detection module is also simultaneously triggered.

Step 203. Perform detection on the twisted pair line between the line detection module and a user equipment by using the line detection module, and supply power to the line detection module by using the energy storage capacitor.

Specifically, the detection may be implemented by using a MELT technology, a SELT technology, or a DELT technology.

According to the MELT technology, in a manner in which a low-frequency voltage signal is added to a line and then a current is detected, or a low-frequency current signal is added and then a voltage is detected, a resistance value and a capacitance value on the line are detected, and whether cases, such as a short circuit, unexpected grounding, and an unexpected connection to a power supply exist on the line. According to the SELT technology, in a manner in which an alternating-current signal of a certain frequency is added to a line and then amplitude and a frequency spectrum of the signal that are reflected from the line are detected, information, such as a length, a diameter, and bridging of the line is detected. According to the DELT technology, in a manner in which a predetermined alternating-current signal is added to a line, then a signal condition is detected at the other end of the line, and a detection result is fed back, conditions, such as noise and attenuation on the line are detected.

Preferably, in this embodiment, the twisted pair line may be detected in a TDR manner of the SELT technology. Because an amount of electricity of the energy storage capacitor is limited, and time required for line detection in the TDR manner is short, the FTTDP device can complete line detection within limited power supply time of the energy storage capacitor. In an actual application process, operation time required for line detection is generally within millisecond magnitude.

Preferably, after determining that the reverse power supply is discontinued, the FTTDP device can start the energy storage capacitor immediately to supply power to subsequent line detection, so as to ensure that line detection is completed within power supply time that can be supported by the energy storage capacitor.

Step 204. Discontinue running of another module other than the line detection module.

Specifically, when the line detection module runs, running of a downlink data transmission module can be discontinued, so that all electric energy provided by the energy storage capacitor for the FTTDP device is used for line detection and transmission of a detection result.

It should be noted that step 203 and step 204 may not have a precedence order. Step 204 can be performed as soon as the detection circuit detects that the reverse power supply is discontinued, so as to save electricity of the energy storage capacitor.

Step 205. Send a detection result to a management server by using the line detection module, so that the management server determines a cause of a line fault according to the detection result.

Specifically, a cause of discontinuation of the reverse power supply generally includes: a fault of the twisted pair line, or power-off of a power supply device by a user. The FTTDP device performs line detection and sends the detection result to the management server, and the management server determines whether the discontinuation of the reverse power supply is caused by a fault of the twisted pair line. If the management server receives a detection result message that includes first information, it indicates that the cause of the discontinuation of the reverse power supply is that the twisted pair line is faulty; and if the management server determines that the twisted pair line is not faulty, it may be determined that the power supply device is actively powered off by a user, and as a result, the discontinuation of the reverse power supply is caused, and therefore, the management server receives a detection result message that includes second information, which indicates that the cause of the discontinuation of the reverse power supply is that the power supply device is actively powered off by a user.

According to the line detection processing method provided in this embodiment of the present invention, a reverse power supply voltage is detected by using a detection circuit, to learn whether reverse power supply is normal; when the reverse power supply is discontinued, a status switch is used to trigger an energy storage capacitor to maintain power supply, so that power supply is provided by the energy storage capacitor, and at the same time line detection is performed; and all operations irrelevant to the line detection are discontinued during a line detection process, so as to reduce power consumption. In addition, a line detection result may be sent to a management server, and management server determines whether discontinuation of the reverse power supply caused by a line fault. Therefore, according to this embodiment, detection may still be performed on a twisted pair line if reverse power supply is discontinued, and a detection result is uploaded to a management server, so that working personnel can learn a cause of a line fault by using the management server.

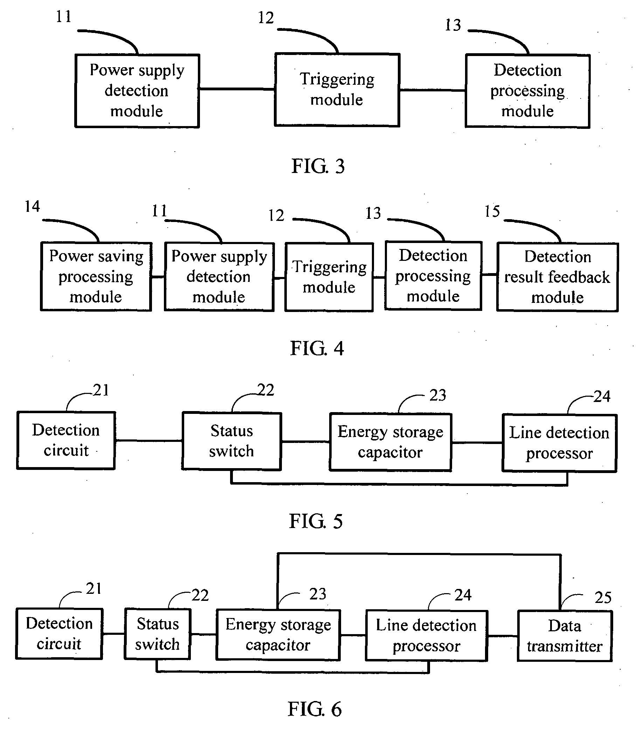

FIG. 3 is a schematic structural diagram of Embodiment 1 of a fiber to the distribution point device according to the present invention. As shown in FIG. 3, the fiber to the distribution point device, that is, an FTTDP device provided in this embodiment includes:
a power supply detection module 11, configured to detect, by using a detection circuit, whether reverse power supply on a twisted pair line is discontinued;
a triggering module 12, configured to: if the reverse power supply on the twisted pair line is discontinued, trigger a status switch to switch from a normal power supply state to a backup power supply state, so as to simultaneously trigger a line detection module and an energy storage capacitor; and
a detection processing module 13, configured to: perform detection on the twisted pair line between the line detection module and a user equipment by using the line detection module, and supply power to the line detection module by using the energy storage capacitor.

The device in this embodiment may be used to execute the technical solutions of the method embodiment shown in FIG. 1, and an implementation principle and a technical effect of this embodiment are similar to those of the method embodiment, and details are not described herein again.

FIG. 4 is a schematic structural diagram of Embodiment 2 of a fiber to the distribution point device according to the present invention. As shown in FIG. 4, based on the device embodiment shown in FIG. 3, the device in this embodiment further includes: a power saving processing module 14, and a detection result feedback module 15. The power saving processing module 14 is configured to discontinue running of another module other than the line detection module. Specifically, the power saving processing module 14 is configured to discontinue running of a downlink data transmission module. The detection result feedback module 15 is configured to send a detection result to a management server, so that the management server determines whether the twisted pair line is faulty.

In this embodiment, the power supply detection module 11 is specifically configured to: detect, by using the detection circuit, whether a reverse power supply voltage on the twisted pair line is a first level; and if the reverse power supply voltage on the twisted pair line is the first level, determine that the reverse power supply is discontinued.

The detection processing module 13 is specifically configured to perform detection on the twisted pair line between the line detection module and the user equipment when the energy storage capacitor is started to supply power.

More specifically, the detection processing module 13 is configured to perform detection on the twisted pair line by using a MELT technology, a SELT technology, or a DELT technology.

Preferably, the detection processing module 13 is specifically configured to perform detection on the twisted pair line in a TDR manner of the SELT technology.

The device in this embodiment may be used to execute the technical solutions of the method embodiment shown in FIG. 2, and an implementation principle and a technical effect of this embodiment are similar to those of the method embodiment, and details are not described herein again.

FIG. 5 is a schematic structural diagram of Embodiment 3 of a fiber to the distribution point device according to the present invention. As shown in FIG. 5, the device in this embodiment includes:
a detection circuit 21, a status switch 22, an energy storage capacitor 23,
and a line detection processor 24.

The detection circuit 21 is configured to detect whether reverse power supply on a twisted pair line is discontinued; the status switch 22 is configured to switch from a normal power supply state to a backup power supply state when the detection circuit 21 detects that the reverse power supply is discontinued, so as to simultaneously trigger the energy storage capacitor 23 and the line detection processor; the energy storage capacitor 23 is configured to supply power to the line detection processor; and the line detection processor 24 is configured to perform detection on the twisted pair line between the device and a user equipment during a process in which the energy storage capacitor 23 supplies power.

The device in this embodiment may be used to execute the technical solutions of the method embodiment shown in FIG. 1, and an implementation principle and a technical effect of this embodiment are similar to those of the method embodiment, and details are not described herein again.

FIG. 6 is a schematic structural diagram of Embodiment 4 of a fiber to the distribution point device according to the present invention. As shown in FIG. 6, the device in this embodiment is based on a device structure shown in FIG. 5. Further, the detection circuit 21 is specifically configured to: detect whether a reverse power supply voltage on the twisted pair line is a first level; and if the reverse power supply voltage on the twisted pair line is the first level, determine that the reverse power supply is discontinued. The line detection processor 24 is configured to discontinue running of another module other than the line detection processor, and further configured to specifically discontinue running of a downlink data transmission module.

Further, the line detection processor 24 is specifically configured to perform detection on the twisted pair line in a TDR manner of a SELT technology.

In addition, the device in this embodiment may further include a data transmitter 25, where
the data transmitter 25 is configured to send a management server a detection result, of the twisted pair line, acquired by the line detection processor 24 through detection.

The device in this embodiment may be used to execute the technical solutions of the method embodiment shown in FIG. 2, and an implementation principle and a technical effect of this embodiment are similar to those of the method embodiment, and details are not described herein again.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention, as defined in the appended claims.

## Claims

1. A line detection processing method, comprising:
detecting (S101), by using a detection circuit, whether reverse power supply on a twisted pair line is discontinued;
if the reverse power supply on the twisted pair line is discontinued, triggering a status switch to switch from a normal power supply state to a backup power supply state, so as to simultaneously trigger a line detection module and an energy storage capacitor (S102); and
performing detection on the twisted pair line between the line detection module and a user equipment by using the line detection module, and supplying power to the line detection module by using the energy storage capacitor (S103).

2. The method according to claim 1, wherein the detecting, by using a detection circuit, whether reverse power supply on a twisted pair line is discontinued comprises:
detecting, by using the detection circuit, whether a reverse power supply voltage on the twisted pair line is a first level; and
if the reverse power supply voltage on the twisted pair line is the first level, determining that the reverse power supply is discontinued.

3. The method according to claim 1 or 2, after the supplying power to the line detection module by using the energy storage capacitor, further comprising:
discontinuing running of another module other than the line detection module.

4. The method according to any one of claims 1 to 3, wherein the performing detection on the twisted pair line between the line detection module and a user equipment comprises:
performing detection on the twisted pair line by using a MELT technology, a SELT technology, or a DELT technology.

5. The method according to claim 4, wherein the performing detection on the twisted pair line by using a SELT technology comprising:
performing detection on the twisted pair line in a time domain reflectometry

6. A device, comprising:
a power supply detection module (11), configured to detect, by using a detection circuit, whether reverse power supply on a twisted pair line is discontinued;
a triggering module (12), configured to: if the reverse power supply on the twisted pair line is discontinued, trigger a status switch to switch from a normal power supply state to a backup power supply state, so as to simultaneously trigger a line detection module and an energy storage capacitor; and
a detection processing module (13), configured to: perform detection on the twisted pair line between the line detection module and a user equipment by using the line detection module, and supply power to the line detection module by using the energy storage capacitor.

7. The device according to claim 6, wherein the power supply detection module (11) is specifically configured to:
detect, by using the detection circuit, whether a reverse power supply voltage on the twisted pair line is a first level; and
if the reverse power supply voltage on the twisted pair line is the first level, determine that the reverse power supply is discontinued.

8. The device according to claim 6 or 7, further comprising:
a power saving processing module (14), configured to discontinue running of another module other than the line detection module.

9. The device according to any one of claims 6 to 8, wherein the detection processing module (13) is specifically configured to:
perform detection on the twisted pair line by using a MELT technology, a SELT technology, or a DELT technology.

10. The device according to any one of claims 6 to 9, further comprising:
a detection result feedback module (15), configured to send a detection result to a management server, so that the management server determines a cause of a line fault according to the detection result.

11. A device, comprising:
a detection circuit (21), configured to detect whether reverse power supply on a twisted pair line is discontinued;
a status switch (22), configured to switch from a normal power supply state to a backup power supply state when the detection circuit detects that the reverse power supply is discontinued, so as to simultaneously trigger a line detection processor and an energy storage capacitor;
the energy storage capacitor (23), configured to supply power to the line detection processor; and
the line detection processor (24), configured to perform detection on the twisted pair line between the device and a user equipment during a process in which the energy storage capacitor supplies power.

12. The device according to claim 11, wherein the detection circuit (21) is specifically configured to: detect whether a reverse power supply voltage on the twisted pair line is a first level; and if the reverse power supply voltage on the twisted pair line is the first level, determine that the reverse power supply is discontinued.

13. The device according to claim 11 or 12, wherein the line detection processor (24) is further configured to discontinue running of another module other than the line detection processor (24).

14. The device according to any one of claims 11 to 13, wherein the line detection processor (24) is specifically configured to perform detection on the twisted pair line in a time domain reflectometry manner of a SELT technology.

## Patentansprüche

1. Leitungsdetektionsverarbeitungsverfahren, das Folgendes umfasst:
Detektieren (S101) durch Verwenden einer Detektionsschaltung, ob die Rückstromversorgung auf einer Zweidrahtleitung unterbrochen ist;
falls die Rückstromversorgung auf der Zweidrahtleitung unterbrochen ist, Auslösen einer Statusumschaltung, um von einem normalen Stromversorgungszustand zu einem Reservestromversorgungszustand zu schalten, um gleichzeitig ein Leitungsdetektionsmodul und einen Energiespeicherkondensator auszulösen (S102); und
Ausführen von Detektion auf der Zweidrahtleitung zwischen dem Leitungsdetektionsmodul und einem Anwendergerät durch Verwenden des Leitungsdetektionsmoduls und Versorgen des Leitungsdetektionsmoduls mit Strom durch Verwenden des Energiespeicherkondensators (S103).

2. Verfahren nach Anspruch 1, wobei das Detektieren durch Verwenden einer Detektionsschaltung, ob die Rückstromversorgung auf einer Zweidrahtleitung unterbrochen ist, Folgendes umfasst:
Detektieren durch Verwenden der Detektionsschaltung, ob eine Rückstromversorgungsspannung auf der Zweidrahtleitung an einem ersten Pegel ist; und
falls die Rückstromversorgungsspannung auf der Zweidrahtleitung an dem ersten Pegel ist, Bestimmen, dass die Rückstromversorgung unterbrochen ist.

3. Verfahren nach Anspruch 1 oder 2, das nach dem Versorgen des Leitungsdetektionsmoduls mit Strom durch Verwenden des Energiespeicherkondensators ferner Folgendes umfasst:
Unterbrechen des Betriebs eines weiteren Moduls, das nicht das Leitungsdetektionsmodul ist.

4. Verfahren nach einem der Ansprüche 1 bis 3, wobei das Ausführen von Detektion auf der Zweidrahtleitung zwischen dem Leitungsdetektionsmodul und einem Anwendergerät Folgendes umfasst:
Ausführen von Detektion auf der Zweidrahtleitung durch Verwenden einer MELT-Technologie, einer SELT-Technologie oder einer DELT-Technologie.

5. Verfahren nach Anspruch 4, wobei das Ausführen von Detektion auf der Zweidrahtleitung durch Verwenden einer SELT-Technologie Folgendes umfasst:
Ausführen einer Detektion auf der Zweidrahtleitung auf Art einer Zeitdomänen-Reflexionsmessung der SELT-Technologie.

6. Vorrichtung, die Folgendes umfasst:
ein Stromversorgungsdetektionsmodul (11), das konfiguriert ist, durch Verwenden einer Detektionsschaltung zu detektieren, ob Rückstromversorgung auf einer Zweidrahtleitung unterbrochen ist;
ein Auslösemodul (12), das konfiguriert ist: falls die Rückstromversorgung auf der Zweidrahtleitung unterbrochen ist, eine Statusumschaltung auszulösen, um von einem normalen Stromversorgungszustand zu einem Reservestromversorgungszustand zu schalten, um gleichzeitig ein Leitungsdetektionsmodul und einen Energiespeicherkondensator auszulösen; und
ein Detektionsverarbeitungsmodul (13), das konfiguriert ist: Detektion auf der Zweidrahtleitung zwischen dem Leitungsdetektionsmodul und einem Anwendergerät durch Verwenden des Leitungsdetektionsmoduls auszuführen und das Leitungsdetektionsmodul durch Verwenden des Energiespeicherkondensators mit Strom zu versorgen.

7. Vorrichtung nach Anspruch 6, wobei das Stromversorgungsdetektionsmodul (11) insbesondere konfiguriert ist:
durch Verwenden der Detektionsschaltung zu detektieren, ob eine Rückstromversorgungsspannung auf der Zweidrahtleitung an einem ersten Pegel ist; und
falls die Rückstromversorgungsspannung auf der Zweidrahtleitung an dem ersten Pegel ist, zu bestimmen, dass die Rückstromversorgung unterbrochen ist.

8. Vorrichtung nach Anspruch 6 oder 7, die ferner Folgendes umfasst:
ein Stromsparverarbeitungsmodul (14), das konfiguriert ist, den Betrieb eines weiteren Moduls, das nicht das Leitungsdetektionsmodul ist, zu unterbrechen.

9. Vorrichtung nach einem der Ansprüche 6 bis 8, wobei das Detektionsverarbeitungsmodul (13) insbesondere konfiguriert ist:
Detektion auf der Zweidrahtleitung durch Verwenden einer MELT-Technologie, einer SELT-Technologie oder einer DELT-Technologie auszuführen.

10. Vorrichtung nach einem der Ansprüche 6 bis 9, die ferner Folgendes umfasst:
ein Detektionsergebnisrückmeldungsmodul (15), das konfiguriert ist, ein Detektionsergebnis zu einem Management-Server zu senden, so dass der Management-Server eine Ursache eines Leitungsfehlers gemäß dem Detektionsergebnis bestimmt.

11. Vorrichtung, die Folgendes umfasst:
eine Detektionsschaltung (21), die konfiguriert ist zu detektieren, ob Rückstromversorgung auf einer Zweidrahtleitung unterbrochen ist;
einen Statusschalter (22), der konfiguriert ist, von einem normalen Stromversorgungszustand zu einem Reservestromversorgungszustand umzuschalten, wenn die Detektionsschaltung detektiert, dass die Rückstromversorgung unterbrochen ist, um gleichzeitig einen Leitungsdetektionsprozessor und einen Energiespeicherkondensator auszulösen;
den Energiespeicherkondensator (23), der konfiguriert ist, den Leitungsdetektionsprozessor mit Strom zu versorgen; und
den Leitungsdetektionsprozessor (24), der konfiguriert ist, Detektion auf der Zweidrahtleitung zwischen der Vorrichtung und einem Anwendergerät während eines Prozesses auszuführen, in dem der Energiespeicherkondensator mit Strom versorgt.

12. Vorrichtung nach Anspruch 11, wobei die Detektionsschaltung (21) insbesondere konfiguriert ist: zu detektieren, ob eine Rückstromversorgungsspannung auf der Zweidrahtleitung an einem ersten Pegel ist; und falls die Rückstromversorgungsspannung auf der Zweidrahtleitung an dem ersten Pegel ist, zu bestimmen, dass die Rückstromversorgung unterbrochen ist.

13. Vorrichtung nach Anspruch 11 oder 12, wobei der Leitungsdetektionsprozessor (24) ferner konfiguriert ist, den Betrieb eines weiteren Moduls, das nicht der Leitungsdetektionsprozessor (24) ist, zu unterbrechen.

14. Vorrichtung nach einem der Ansprüche 11 bis 13, wobei der Leitungsdetektionsprozessor (24) insbesondere konfiguriert ist, Detektion auf der Zweidrahtleitung auf Art einer Zeitdomänen-Reflexionsmessung einer SELT-Technologie auszuführen.

## Revendications

1. Procédé de traitement de détection de ligne, comprenant les étapes suivantes :
détecter (S101), en utilisant un circuit de détection, si une alimentation électrique inverse sur une ligne à paires torsadées est discontinue ;
si l'alimentation électrique inverse sur la ligne à paires torsadées est discontinue, déclencher un commutateur d'état pour basculer d'un état d'alimentation électrique normale à un état d'alimentation électrique de secours, afin de déclencher simultanément un module de détection de ligne et un condensateur de stockage d'énergie (S102) ; et
exécuter une détection sur la ligne à paires torsadées entre le module de détection de ligne et un équipement utilisateur en utilisant le module de détection de ligne, et
fournir une alimentation au module de détection de ligne en utilisant le condensateur de stockage d'énergie (S103).

2. Procédé selon la revendication 1, dans lequel l'étape consistant à détecter, en utilisant un circuit de détection, si une alimentation électrique inverse sur une ligne à paires torsadées est discontinue comprend :
détecter, en utilisant le circuit de détection, si une tension d'alimentation électrique inverse sur la ligne à paires torsadées est un premier niveau ; et
si la tension d'alimentation électrique inverse sur la ligne à paires torsadées est le premier niveau, déterminer que l'alimentation électrique inverse est discontinue.

3. Procédé selon la revendication 1 ou 2, après l'étape consistant à fournir une alimentation au module de détection de ligne en utilisant le condensateur de stockage d'énergie, comprenant en outre :
suspendre l'exécution d'un module autre que le module de détection de ligne.

4. Procédé selon l'une quelconque des revendications 1 à 3, dans lequel l'étape consistant à exécuter une détection sur la ligne à paires torsadées entre le module de détection de ligne et un équipement utilisateur comprend :
exécuter une détection sur la ligne à paires torsadées en utilisant une technologie MELT, une technologie SELT, ou une technologie DELT.

5. Procédé selon la revendication 4, dans lequel l'étape consistant à exécuter une détection sur la ligne à paires torsadées en utilisant une technologie SELT comprend :
exécuter une détection sur la ligne à paires torsadées dans une réflectométrie de domaine temporel.

6. Dispositif, comprenant :
un module de détection d'alimentation électrique (11), configuré pour détecter, en utilisant un circuit de détection, si une alimentation électrique inverse sur une ligne à paires torsadées est discontinue ;
un module de déclenchement (12), configuré pour : si l'alimentation électrique inverse sur la ligne à paires torsadées est discontinue, déclencher un commutateur d'état pour basculer d'un état d'alimentation électrique normale à un état d'alimentation électrique de secours, afin de déclencher simultanément un module de détection de ligne et un condensateur de stockage d'énergie ; et
un module de traitement de détection (13), configuré pour : exécuter une détection sur la ligne à paires torsadées entre le module de détection de ligne et un équipement utilisateur en utilisant le module de détection de ligne, et fournir une alimentation au module de détection de ligne en utilisant le condensateur de stockage d'énergie.

7. Dispositif selon la revendication 6, dans lequel le module de détection d'alimentation électrique (11) est configuré spécifiquement pour :
détecter, en utilisant le circuit de détection, si une tension d'alimentation électrique inverse sur la ligne à paires torsadées est un premier niveau ; et
si la tension d'alimentation électrique inverse sur la ligne à paires torsadées est le premier niveau, déterminer que l'alimentation électrique inverse est discontinue.

8. Dispositif selon la revendication 6 ou 7, comprenant en outre :
un module de traitement d'économie d'énergie (14), configuré pour suspendre l'exécution d'un module autre que le module de détection de ligne.

9. Dispositif selon l'une quelconque des revendications 6 à 8, dans lequel le module de traitement de détection (13) est configuré spécifiquement pour :
exécuter une détection sur la ligne à paires torsadées en utilisant une technologie MELT, une technologie SELT, ou une technologie DELT.

10. Dispositif selon l'une quelconque des revendications 6 à 9, comprenant en outre :
un module de rétroaction de résultat de détection (15), configuré pour envoyer un résultat de détection à un serveur de gestion, pour que le serveur de gestion détermine une cause d'une défaillance de ligne selon le résultat de détection.

11. Dispositif, comprenant :
un circuit de détection (21), configuré pour détecter si une alimentation électrique inverse sur une ligne à paire torsadées est discontinue ;
un commutateur d'état (22), configuré pour basculer d'un état d'alimentation électrique normale à un état d'alimentation électrique de secours lorsque le circuit de détection détecte que l'alimentation électrique inverse est discontinue, afin de déclencher simultanément un processeur de détection de ligne et un condensateur de stockage d'énergie ;
le condensateur de stockage d'énergie (23), configuré pour fournir une alimentation au processeur de détection de ligne ; et
le processeur de détection de ligne (24), configuré pour exécuter une détection sur la ligne à paires torsadées entre le dispositif et un équipement utilisateur durant un processus dans lequel le condensateur de stockage d'énergie fournit une alimentation.

12. Dispositif selon la revendication 11, dans lequel le circuit de détection (21) est configuré spécifiquement pour : détecter si une tension d'alimentation électrique inverse sur la ligne à paires torsadées est un premier niveau ; et si la tension d'alimentation électrique inverse sur la ligne à paires torsadées est le premier niveau, déterminer que l'alimentation électrique inverse est discontinue.

13. Dispositif selon la revendication 11 ou 12, dans lequel le processeur de détection de ligne (24) est en outre configuré pour suspendre l'exécution d'un module autre que le processeur de détection de ligne (24).

14. Dispositif selon l'une quelconque des revendications 11 à 13, dans lequel le processeur de détection de ligne (24) est configuré spécifiquement pour exécuter une détection sur la ligne à paires torsadées dans un mode de réflectométrie de domaine temporel d'une technologie SELT.
